# EUROPEAN PATENT APPLICATION

(11) **EP 2 805 820 A1**
(43) Date of publication of application: **26.11.2014**
(21) Application number: 13169000.0
(22) Date of filing: 23.05.2013
(51) Int. Cl.: B32B 27/08, B32B 27/30, B32B 27/36, B32B 17/06, B32B 17/02, B29C 65/00

(54) **Method for producing sheets with a scratch-resistant surface and sheets obtained from such method**

(71) Applicant: Andreatta, Mauro, 31047 Ponte di Piave (TV) (IT)
(72) Inventor: Andreatta, Mauro, 31047 Ponte di Piave (TV) (IT)
(74) Representative: Giugni, Valter

(57) **Abstract**

Method for making sheets consisting of a support substrate in plate or reeled form coated with a scratch-resistant finishing film, comprising the following steps:
- prearranging the support substrate on a feeding path and the finishing film in a feeding device;
- aligning and tensioning the support substrate and the finishing film;
- applying the finishing film on the support substrate, making them adhere to each other to form the sheet;
- discharging the resulting sheet.

The support substrate is preferably made up of a polyester (PET) sheet, and the scratch-resistant film consists of a layer of laminated polyester containing glass fibres, which is applied to the support substrate by heating and compression in a pressurized white chamber; the resulting sheet, before being discharged, is cooled and subjected to surface treatment through a corona discharge effect.

## Description

### TECHNICAL FIELD OF INVENTION

The present invention relates to the production of sheets with scratch-resistant surfaces, used to coat panels to be used in various fields, such as in the furnishing field and in the field of transportation vehicles.

### BACKGROUND OF THE INVENTION

Patent application WO 2011/114335 discloses a method for the production of glass-polymer laminates that can be used for optical and electronic products and also as scratch-resistant coatings on polymeric substrates. The method foresees the application of a sintered glass on a transfer substrate to form a coated substrate, the exposure of the coated substrate to a temperature higher than the melting temperature of the sintered glass in order to form a vitreous layer on the transfer substrate, the lamination of the vitreous layer and of the polymeric substrate, and the removal of the transfer substrate from the vitreous layer to form the laminate.

Patent application WO 2005/084963 discloses a process and an apparatus for producing a film that can be used to apply paints and colours on an object to be decorated. The process includes the following steps: applying a layer of colour on a first film having release property; applying a layer of paint on the coloured layer of the first film; partially polymerizing the layer of paint; transferring the layers of paint and colour by release from the first to a second film having release property; polymerizing the layer of paint transferred on the second film.

### SUMMARY OF THE INVENTION

The present invention proposes the production of sheets for coating three-dimensional objects, said sheets necessarily having, in addition to the characteristic of scratch-resistant surfaces, also the property of allowing the application of particular decorations to the objects that are to be coated.

Moreover, the sheets according to the invention must also be thermoformable and ecological, in the sense of not containing harmful substances (such as PVC) that could preclude their recyclability.

The sheets according to the invention can have glossy or matte surfaces, or they may also be luminescent, smooth or coarse.

These and other characteristics of the invention would be evident from the description that follows, given by way of non-limiting example.

The scope of protection of the present patent is defined by the conclusive claims.

### DESCRIPTION OF THE INVENTION

The sheets with scratch-resistant surfaces according to the invention are substantially made up of two component elements: a support substrate and a finishing film.

The support substrate is preferably made up of a polyester sheet (PET). This material is easily available on the market; it is ecological and thus recyclable, and is malleable, so as to allow it to be moulded to suit the requirements of use as lining of three-dimensional objects. The polyester support has a thickness that may vary between 0.200 micron and 2 mm.

Another support substrate consists of a sheet of polystyrene (PS) having a thickness of 0.200 micron to 1 mm.

The support substrate can also be an ABS (acrylonitrile butadiene styrene) sheet with a thickness between 0.200 and 1 mm.

Finally, the support substrate may consist of a plate of polymethyl methacrylate (PMMA) or polycarbonate (PC), with a thickness of 0.100 micron to 2 cm.

The finishing film is preferably made up of a polyester film, for example such as the one described in the patent application WO 2011/114335 having a thickness between 15 and 23 micron. This film has a scratch-resistant surface and the opposite surface provided with a binder to adhere it to the support substrate. In this case, the finishing film remains applied to the support substrate.

Normally, the finishing film is transparent, but if necessary it may be printed by means of rotogravure and/or digital printing systems to present a decoration as desired on the surface that adheres to the support substrate. In this case, the finishing film, after having transferred the decorative printing to the support substrate, is removed, leaving on the support substrate the glossy scratch-resistant coating of the decoration deposited on it during printing.

The method of production of the sheets with scratch-resistant surfaces according to the invention is carried out in different steps that are essentially equal, both to obtain sheets wound up in reels and to obtain flat plates.

The first step consists of feeding the support substrate (in the form of sheets or plates) and the finishing film into the production line. If the support substrate is in sheet form, feeding is carried out by unwinding the sheet from a reel. If the support substrate is in plate form, feeding is carried out by means of a feeding table, normally of a roller table or conveyor belt type. The feeding devices are of conventional type and automated, so as to enable them to be used selectively and to alternate them. The finishing film is normally fed by unwinding it from the respective reel.

It should be noted that both the support substrate and the finishing film can be pre-treated by spreading a gluing substance on the surfaces that are to be adhered to each other.

A characteristic feature, according to the invention, is the fact that the whole production process is carried out in an air-conditioned environment, specifically in a pressurized white chamber, so as to eliminate all possible contamination of the surfaces involved. Any contamination would, in fact, make the end product unacceptable.

In the feeding step, particular care must be taken with the exact tensioning of the finishing film with respect to the support substrate, so as to guarantee that a sheet without surface imperfections is obtained.

The second step of the method of production of the sheets with scratch resistant surfaces, according to the invention, consists of heating the two component elements. Normally, this step involves pre-heating with infrared lamps followed by the final heating by passing the components over rollers heated with water or diathermic oil to a temperature between 100°C and 220°C, variable according to the type of material of the support substrate.

The third step of the method according to the invention consists in compressing the two heated components so as to complete their adhesion to each other. The compression of the two components is carried out by making them pass, at a constant infeed speed between 5 and 25 m/min, between two rollers exerting a pressure of between 2 and 8 kg/cm².

The fourth step of the method according to the invention consists in cooling the finished sheet by passing it through a series of rollers containing cold water, and of treating it with the corona discharge effect, which makes it possible to increase the surface tension to improve the adhesiveness of the sheet in the subsequent application to the object to be coated.

The sheet made with the method described herein is finally wound in a reel, with an interposed backing film. Similarly, the plates made with the same method are stacked, with the backing film interposed between them, using normal well-known handling systems provided with vertical suction cups.

## Claims

1. A method for producing sheets made up of a support substrate in plate or reeled form coated with a finishing scratch resistant film comprising the following steps:
- prearranging the support substrate on a feeding path and the finishing film in a feeding device,
- aligning and tensioning the support substrate and the finishing film,
- applying the finishing film on the support substrate, making them adhere to each other to form the sheet,
- discharging the resulting sheet,
**characterized in that** the support substrate is made up of a polyester sheet (PET) and the scratch resistant finishing film is made up of a laminated polyester layer containing glass fibers, which is applied to the support substrate by heating and compression in a pressurized white room, the obtained sheet, before being discharged, is cooled and subjected to surface treatment through a corona discharge effect.

2. A method according to claim 1 **characterized in that**, alternatively, the support substrate is made up of polystyrene (PS), acrylonitrile-butadienestyrene (ABS), polymethyl methacrylate (PMMA), or polycarbonate (PC).

3. A method according to claim 1 or 2, **characterized in that** the finishing film application on the support substrate is carried out through heating at temperatures between 100°C and 220°C and at pressures between 2kg/cm² and 8 kg/cm² with a constant infeed speed between 5m/min e 25m/min.

4. A method according to one of the preceding claims **characterized in that** the finishing film surface is previously printed with a determined decoration, transferred on the support substrate surface while applying the finishing film on the support substrate, after that the finishing film is removed leaving the decoration imprinted on the support substrate.

5. A sheet having a scratch resistant surface **characterized in that** it is produced by the method according to one of the preceding claims.
